# EUROPEAN PATENT SPECIFICATION

(11) **EP 4 369 512 B1**
(45) Date of publication and mention of the grant of the patent: **17.06.2026**
(21) Application number: 22841372.0
(22) Date of filing: 12.07.2022
(51) Int. Cl.: H01M 10/48, H01M 50/51, H01M 50/211, H01M 50/507, H01M 50/569, H01M 50/597

(54) **BATTERY MODULE AND ELECTRICAL DEVICE**
BATTERIEMODUL UND ELEKTRISCHE VORRICHTUNG
MODULE DE BATTERIE ET DISPOSITIF ÉLECTRIQUE

(30) Priority: 14.07.2021 CN 202110796433
(43) Date of publication of application: 15.05.2024
(73) Proprietor: NINGDE AMPEREX TECHNOLOGY LIMITED, Ningde City, Fujian Province 352100 (CN)
(72) Inventor: LI, Kunlong, Dongguan, Guangdong 523000 (CN); ZHANG, Chengxiang, Dongguan, Guangdong 523000 (CN); WANG, Pengfei, Dongguan, Guangdong 523000 (CN); WANG, Shenbo, Dongguan, Guangdong 523000 (CN)
(74) Representative: Icosa
(86) International application number: PCT/CN2022/105196
(87) International publication number: WO 2023/284737

(56) References cited:
- EP-B1- 3 062 365
- WO-A1-2019/101166
- CN-A- 113 540 704
- CN-U- 211 957 712
- JP-A- 2012 212 605
- JP-A- 2012 212 605
- US-A1- 2016 248 068
- US-B2- 10 128 483
- US-B2- 9 496 544

## Description

### TECHNICAL FIELD

This application relates to the technical field of cell stacking, and in particular, to a battery module and an electrical device.

### BACKGROUND

Many cells on the market at present are prone to a short circuit if tabs of two adjacent cells are disposed too close to each other during stacking, thereby posing safety hazards to some extent, as for example presented in documents WO 2019/101166, JP 2012 212605 A, US 10 128 483 B2, US 9 496 544 B2 or EP 3 062 365 B1.

### SUMMARY

In view of the foregoing situation, it is necessary to provide a battery module and an electrical device to reduce risks of short circuits of cells. The invention is defined in the independent claim 1 and its dependent claims 2-15.

An embodiment of this application provides a battery module, including a plurality of cells and a bracket. The plurality of cells are stacked along a first direction. Each cell includes a first terminal and a second terminal. A polarity of the first terminal is opposite to a polarity of the second terminal. The bracket includes a plurality of groups of through-holes. Each group of through-holes includes a first terminal through-hole and a second terminal through-hole. The first terminal and the second terminal of a same cell pass through the first terminal through-hole and the second terminal through-hole in a same group of through-holes respectively. The plurality of groups of through-holes include a first group of through-holes, a second group of through-holes, and third groups of through-holes located between the first group of through-holes and the second group of through-holes. Along the first direction, a distance D1 between the first terminal through-hole in the first group of through-holes and the second terminal through-hole in a third group of through-holes adjacent to the first group of through-holes is greater than a distance D3 between two adjacent third groups of through-holes.

This increases the distance between the first terminal inside the first terminal through-hole in the first group of through-holes and the second terminal inside the second terminal through-hole in the third group of through-holes adjacent to the first group of through-holes, reduces risks of short circuits between the first terminal and the second terminal, and increases a connection area, thereby making it convenient to dispose a first connecting piece, and in turn, reducing risks of short circuits between the first connecting piece and the second terminal inside the adjacent third group of through-holes.

In the two adjacent third groups of through-holes, a distance between the first terminal through-hole in one of the two adjacent third groups of through-holes and the second terminal through-hole in the other two adjacent of the third groups of through-holes is D3, and the first terminal through-hole in the one of the two adjacent third groups of through-holes and the second terminal through-hole in the other of the two adjacent third groups of through-holes are disposed opposite to each other along the first direction.

In some embodiments of this application, a difference between D1 and D3 is greater than 6 mm.

The foregoing embodiment helps to increase a connection area between the first connecting piece and the first terminal, and reinforce a weld region between the first connecting piece and the first terminal.

In some embodiments of this application, a distance between the second terminal through-hole in the second group of through-holes and the first terminal through-hole in a third group of through-holes adjacent to the second group of through-holes is D2, and D2 is less than D3.

The foregoing embodiment can reduce the distance between the second group of through-holes and the adjacent third group of through-holes, and adjust the distance between the first terminal through-hole in the first group of through-holes and the second group of through-holes along the first direction X.

In some embodiments of this application, along the first direction, a distance d1 between the first terminal through-hole in the first group of through-holes and the second terminal through-hole in the second group of through-holes is equal to a distance d2 between the second terminal through-hole in the first group of through-holes and the first terminal through-hole in the second group of through-holes.

The foregoing embodiment helps to make the following two lengths consistent by cutting: a length by which the first terminal extends beyond the cell housing, and a length by which the second terminal extends beyond the cell housing, thereby facilitating production.

In some embodiments of this application, the bracket further includes a base plate and a plurality of groups of protruding portions that are spaced apart. The base plate includes a first side and a second side that are disposed opposite to each other along a second direction. The plurality of groups of protruding portions are located on the first side of the base plate. Viewed along the second direction, the plurality of groups of protruding portions include a first group of protruding portions located between the first group of through-holes and the third group of through-holes adjacent to the first group of through-holes, a second group of protruding portions located between the second group of through-holes and the third group of through-holes adjacent to the second group of through-holes, and a third group of protruding portions located between the first group of protruding portions and the second group of protruding portions; and the first group of protruding portions includes a first part located between the first terminal through-hole and the second terminal through-hole in the adjacent third group of through-holes, and a second part located between the second terminal through-hole and the first terminal through-hole in the adjacent third group of through-holes. Projected along the second direction, a width of a projection of the first part on the base plate along the first direction is W1, a width of a projection of the second part on the base plate along the first direction is W2, and W1 is greater than W2.

The foregoing embodiment helps the first terminal of the first part to keep away from the second terminal inside the adjacent third group of through-holes along the first direction X, increase the distance between the first terminal and the second terminal, and reduce risks of short circuits between the first terminal and the second terminal.

In some embodiments of this application, along the first direction, a distance between the first part and the second group of protruding portions is equal to a distance between the second part and the second group of protruding portions.

In some embodiments of this application, each group of protruding portions gradually diminishes in size along an opposite direction of the second direction.

The foregoing embodiment exerts a guiding effect on the movement of the first terminal and the second terminal, and guides the first terminal and the second terminal to move close to the base plate.

In some embodiments of this application, when viewed along the second direction, the second group of protruding portions includes a third part located between a second terminal through-hole in the second group of through-holes and a first terminal through-hole in the third group of through-holes adjacent to the second group of through-holes, and a fourth part located between a first terminal through-hole in the second group of through-holes and a second terminal through-hole in the third group of through-holes adjacent to the second group of through-holes. Projected along the second direction, a width of a projection of the third part on the base plate along the first direction is W3, a width of a projection of the fourth part on the base plate along the first direction is W4, and W3 is less than W4.

During the assembling, the foregoing embodiment helps to provide a guidance and achieve the following effects: the second terminal inside the second terminal through-hole in the second group of through-holes is disposed close to the adjacent third group of through-holes; and the distance between the first terminal through-hole in the second group of through-holes and the adjacent third group of through-holes is equal to D3.

In some embodiments of this application, along the first direction, the base plate includes a second lateral edge and a first lateral edge, a distance between the second terminal through-hole in the second group of through-holes and the first lateral edge is d21, a distance between the first terminal through-hole in the second group of through-holes and the first lateral edge is d22, and d21 is greater than d22.

The foregoing embodiment helps to increase the distance between the second terminal through-hole in the second group of through-holes and the lateral edge of the base plate, and facilitates welding between the second terminal connecting portion and the second connecting piece.

In some embodiments of this application, along the first direction, the base plate includes a second lateral edge and a first lateral edge, and an end that is of the first terminal through-hole in the first group of through-holes and that is oriented away from the second group of through-holes penetrates the second lateral edge.

The foregoing embodiment makes it convenient to fold outward the first terminal connecting portion disposed inside the first terminal through-hole in the first group of through-holes, and weld the first terminal connecting portion to the first connecting piece.

In some embodiments of this application, the bracket includes a third side and a fourth side that are disposed opposite to each other along a third direction. The bracket includes an opening made on the third side, a plurality of groups of interstices are formed between the plurality of groups of protruding portions. Along the third direction, the opening communicates with the plurality of groups of interstices.

In some embodiments of this application, a first beveled face and a second beveled face are disposed at ends that are of the plurality of groups of protruding portions and that are located on the third side. A distance between the first beveled face and the second beveled face of a same group of protruding portions along the first direction increases gradually from the third side to the fourth side.

The foregoing embodiment helps to guide the first terminal and the second terminal into an interstice between two adjacent groups of protruding portions, thereby improving the success rate of docking the cell to the bracket.

In some embodiments of this application, the cell further includes a cell housing and an electrode assembly. The cell housing includes an accommodation portion and an edge sealing portion extending outward from the accommodation portion. The accommodation portion includes a first surface and a second surface that are disposed opposite to each other along the first direction. The first terminal and the second terminal protrude beyond the cell housing from the edge sealing portion. The electrode assembly is accommodated in the accommodation portion. The first terminal and the second terminal are electrically connected to the electrode assembly.

In some embodiments of this application, the edge sealing portion is disposed between a plane where the first surface is located and a plane on where the second surface is located, and the edge sealing portion is closer to the first surface than the second surface.

In some embodiments of this application, the cell housing includes a first region and a second region. The first region 21a contains a first space. The electrode assembly is disposed in the first space. The second region is a flat plate-like structure. The first region is connected to the second region. A lateral edge of the first region is connected to the lateral edge of the second region to form a plurality of edge sealing portions. The first terminal and the second terminal extend beyond the cell housing from one of the edge sealing portions.

In some embodiments of this application, the first surface is disposed in the second region, and the second surface is disposed in the first region.

In some embodiments of this application, two first surfaces or two second surfaces of any two adjacent cells are disposed opposite to each other.

In some embodiments of this application, the first terminal is connected to the second terminal between at least two adjacent cells, or the first terminal of one cell is connected to the first terminal of an adjacent cell.

In some embodiments of this application, the first terminal and the second terminal that are connected to each other are connected together by bending toward each other. The first terminal includes a first terminal connecting portion that has passed through the first terminal through-hole. The second terminal includes a second terminal connecting portion that has passed through the second terminal through-hole. The battery module further includes a plurality of conductive pieces. The plurality of conductive pieces are disposed on a side that is of the base plate and that is oriented facing away from the protruding portion. The first terminal connecting portion and the second terminal connecting portion are connected to the conductive piece. The bracket further includes a partitioning portion located on the first side of the base plate, and the partitioning portion is disposed between the first terminal through-hole and the second terminal through-hole in a same group of through-holes.

The partitioning portion in the foregoing embodiment can reduce the probability of other foreign substances dropping into a space between the first terminal through-hole and the second terminal through-hole in the same group, thereby reducing the risk of a short circuit between the first terminal and the second terminal caused by the foreign substances. Optionally, the partitioning portion can reinforce the structural strength of the bracket.

In some embodiments of this application, the battery module further includes a sampling piece. The sampling piece is disposed on a side that is of the base plate and that is oriented facing away from the protruding portion, and is connected to the conductive piece.

In some embodiments of this application, the battery module further includes a first connecting piece and a second connecting piece. One end of the first connecting piece is connected to the first terminal that passes through the first terminal through-hole in the first group of through-holes. Another end of the first connecting piece includes a first connecting portion. One end of the second connecting piece is connected to the second terminal that passes through the second terminal through-hole in the second group of through-holes. Another end of the second connecting piece includes a second connecting portion. The first connecting portion and the second connecting portion are located on a same side of the base plate.

The foregoing embodiment helps to connect external devices and improve space efficiency.

In some embodiments of this application, the bracket further includes a first insulation rod. One end of the first insulation rod is connected to the base plate, and another end abuts on the first connecting piece.

In the foregoing embodiment, the first insulation rod can well support the first connecting piece, and reduce the probability of a short circuit caused by contact between the first connecting piece and the bent first terminal or second terminal.

In some embodiments of this application, the bracket further includes an insulation block. The insulation block is disposed on the second side of the base plate and is located between the first terminal through-hole in the first group of through-holes and an adjacent third group of through-holes. Along the third direction, a length of the insulation block is greater than a length of the first terminal through-hole in the first group of through-holes.

The insulation block in the foregoing embodiment is configured to obstruct the first connecting piece and the first terminal welded on the first connecting piece from contacting the adjacent second terminal, thereby reducing risks of short circuits between the first connecting piece and the second terminal in the third group of through-holes.

An embodiment of this application further provides an electrical device, including the foregoing battery module.

The battery module and the electrical device increase the distance between the first terminal and the second terminal by increasing the distance between the first terminal through-hole in the first group of through-holes and the second terminal through-hole in the third group of through-holes adjacent to the first group of through-holes. This reduces risks of short circuits between the first terminal and the second terminal caused by deficient spacing, increases the connection area, and makes it convenient to dispose the first connecting piece, thereby reducing risks of short circuits between the first connecting piece and the second terminal inside the adjacent third group of through-holes.

### BRIEF DESCRIPTION OF DRAWINGS

FIG. 1 is a schematic exploded view of a battery module according to an embodiment of this application;
FIG. 2 is a first view of a cell connected to a bracket according to an embodiment of this application;
FIG. 3 is a first view of a cell according to an embodiment of this application;
FIG. 4 is a second view of a cell according to an embodiment of this application;
FIG. 5 is a schematic exploded view of an unpackaged cell according to an embodiment of this application;
FIG. 6 is a first view of a bracket according to an embodiment of this application;
FIG. 7 is a second view of a bracket according to an embodiment of this application;
FIG. 8 is a schematic structural diagram of tabs of the cell are still to be bent according to an embodiment of this application;
FIG. 9 is a schematic structural diagram of cells stacked together according to an embodiment of this application;
FIG. 10 is a schematic structural diagram of stacked cells and bent tabs according to an embodiment of this application;
FIG. 11 is a schematic structural diagram of a sampling piece and a conductive piece mounted on a bracket according to an embodiment of this application;
FIG. 12 is a second view of a cell connected to a bracket according to an embodiment of this application;
FIG. 13 is a schematic structural diagram of a second connecting piece connected to a bracket according to an embodiment of this application;
FIG. 14 is a schematic structural diagram of a first connecting piece and a second connecting piece that are connected to a bracket according to an embodiment of this application;
FIG. 15 is a schematic structural diagram of an electrical device according to an embodiment of this application;
FIG. 16 is a schematic structural diagram of a distance between a first group of through-holes and an adjacent third group of through-holes according to an embodiment of this application;
FIG. 17 is a schematic structural diagram of a distance between two adjacent third groups of through-holes according to an embodiment of this application; and
FIG. 18 is a schematic structural diagram of a distance between a first group of through-holes and a second group of through-holes according to an embodiment of this application.

Reference numerals of main components:

| | |
|---|---|
| Battery module | 100 |
| Bracket | 1 |
| Base plate | 11 |
| First lateral edge | 11A |
| Second lateral edge | 11B |
| First side | 11a |
| Second side | 11b |
| Third side | 11c |
| Fourth side | 11d |
| Opening | 11e |
| Through-hole | 111 |
| First group of through-holes | 111a |
| Second group of through-holes | 111b |
| Third group of through-holes | 111c |
| First terminal through-hole | 1111 |
| Second terminal through-hole | 1112 |
| Protruding portion | 12 |
| First beveled face | 12a |
| Second beveled face | 12b |
| First group of protruding portions | 121 |
| First part | 121a |
| Second part | 121b |
| Second group of protruding portions | 122 |
| Third part | 122a |
| Fourth part | 122b |
| Fifth part | 121c |
| Third group of protruding portions | 123 |
| Fourth group of protruding portions | 124 |
| Fifth group of protruding portions | 125 |
| Partitioning portion | 13 |
| First insulation rod | 14 |
| Second insulation rod | 15 |
| Insulation block | 16 |
| Cell | 2 |
| Cell housing | 21 |
| First region | 21a |
| Second region | 21b |
| First space | 211a |
| Accommodation portion | 211 |
| First surface | 2111 |
| Second surface | 2112 |
| Edge sealing portion | 212 |
| Electrode assembly | 22 |
| First terminal | 23 |
| Second terminal | 24 |
| Shell | 3 |
| First shell body | 31 |
| Second shell body | 32 |
| Third through-hole | 321 |
| Fourth through-hole | 322 |
| Fifth through-hole | 323 |
| Conductive piece | 4 |
| Sampling piece | 5 |
| First connecting piece | 61 |
| First connecting portion | 611 |
| Second connecting piece | 62 |
| Second connecting portion | 621 |
| First filler | 71 |
| Second filler | 72 |
| First cell | 81 |
| Second cell | 82 |
| First direction | X |
| Second direction | Y |
| Third direction | Z |

This application is further described below with reference to the following specific some embodiments and the foregoing drawings.

### DETAILED DESCRIPTION OF EMBODIMENTS

The following describes the technical solutions in some embodiments of this application with reference to the drawings hereto. Evidently, the described some embodiments are merely a part of but not all of some embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component.

Unless otherwise defined, all technical and scientific terms used herein have the same meanings as usually understood by a person skilled in the technical field of this application. The terms used in the specification of this application herein are merely intended for describing specific some embodiments but are not intended to limit this application. The term "and/or" used herein includes any and all combinations of one or more related items preceding and following the term.

Understandably, when the two components are arranged parallel or perpendicular to each other in the same direction, an angle may exist between the two components. A tolerance of 0% to ±5% is allowed for the angle between the two components, and the measurement errors of the two components may be greater than, equal to, or less than the tolerance of 0 to ±5%.

The following further describes some embodiments of this application with reference to drawings.

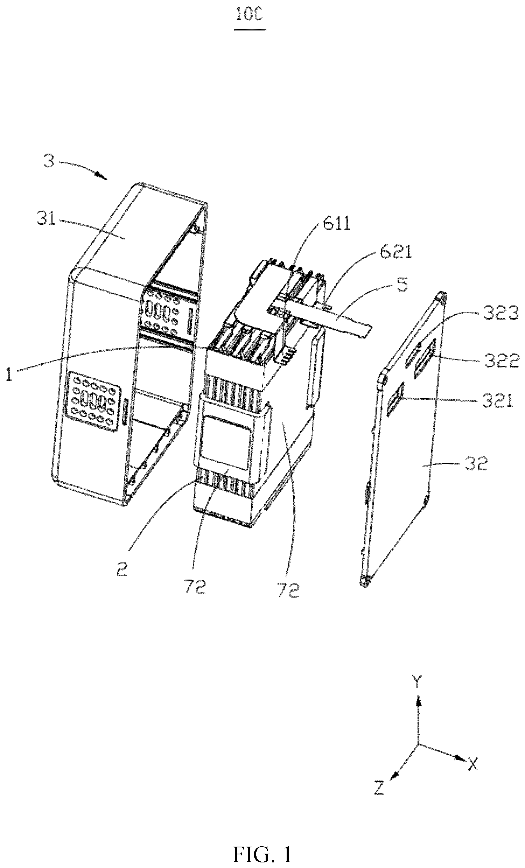

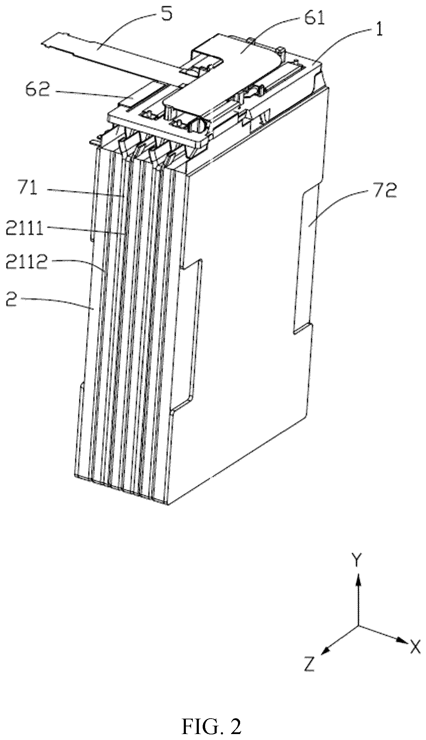

As shown in FIG. 1 and FIG. 2, an embodiment of this application provides a battery module 100, including a shell 3, a bracket 1, and a plurality of cells 2. The shell 3 includes a first shell body 31 and a second shell body 32. The first shell body 31 and the second shell body 32 form an accommodation space. The plurality of cells 2 are stacked in sequence along the first direction X. The plurality of cells 2 are connected to the bracket 1 and then accommodated in the accommodation space.

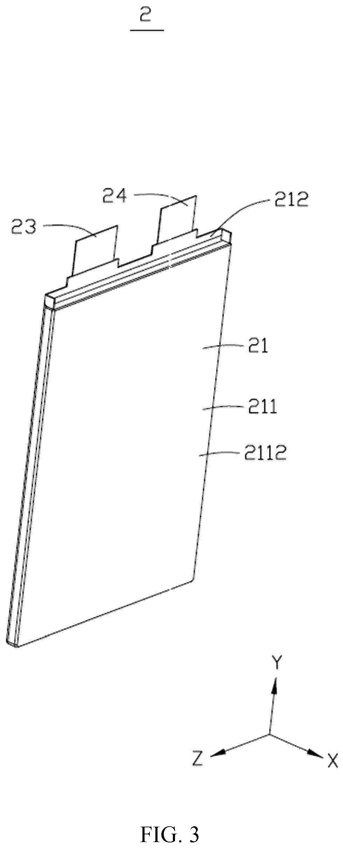

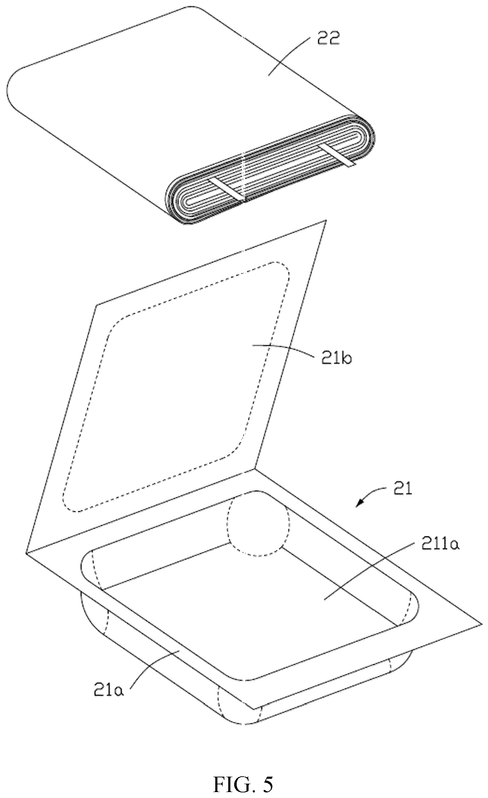

As shown in FIG. 3, FIG. 4, and FIG. 5, the cell 2 includes a cell housing 21, an electrode assembly 22, a first terminal 23, and a second terminal 24. The electrode assembly 22 is accommodated in the cell housing 21. The first terminal 23 and the second terminal 24 are connected to the electrode assembly 22, and protrude out of the cell housing 21. The electrode assembly 22 includes a jelly-roll structure formed by winding a positive electrode plate, a negative electrode plate, and a separator. Further, the cell housing 21 includes an accommodation portion 211 and an edge sealing portion 212 that are connected to each other. The edge sealing portion 212 is located at an edge of the accommodation portion 211, and extends outward from the accommodation portion 211. The electrode assembly 22 is accommodated in the accommodation portion 211. The first terminal 23 and the second terminal 24 protrude out of the edge sealing portion 212. An extension direction of a lateral edge at which the cell 2 is connected to the bracket 1 is a third direction Z. The first terminal 23 and the second terminal 24 of at least one cell 2 are spaced apart in sequence along the third direction Z.

In some embodiments, the cell housing 21 includes a first region 21a and a second region 21a. The first region 21a contains a first space 211a. The electrode assembly 22 is disposed in the first space 211a. The second region 21b is approximately a flat plate-like structure. The first region 21a is connected to the second region 21b. A lateral edge of the first region 21a is connected to the lateral edge of the second region 21b to form a plurality of edge sealing portions 212. The first terminal 23 and the second terminal 24 extend beyond the cell housing 21 from one of the edge sealing portions 212.

The polarity of the first terminal 23 is opposite to the polarity of the second terminal 24. One of the first terminal 23 or the second terminal 24 is a positive terminal, and the other is a negative terminal. In some embodiments, the cell housing 21 includes an aluminum plastic film. In this embodiment, an example is described in which the second terminal 24 is a positive terminal and the first terminal 23 is a negative terminal.

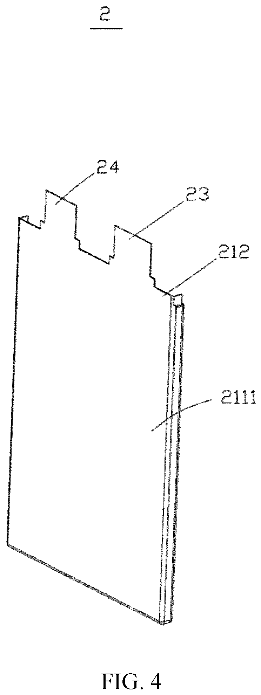

Referring to FIG. 3 and FIG. 4, along the first direction X, the accommodation portion 211 includes a first surface 2111 and a second surface 2112 that are opposite to each other. The first surface 2111 and the second surface 2112 are two opposite outer surfaces of the accommodation portion 211. Optionally, the first surface 2111 is disposed in the second region 21b, and the second surface 2112 is disposed in the first region 21a.

Further, the edge sealing portion 212 is located between a plane on which the first surface 2111 is located and a plane on which the second surface 2112 is located. In some embodiments, a distance between the edge sealing portion 212 and the plane on which the first surface 2111 is located is less than a distance between the edge sealing portion 212 and the plane on which the second surface 2112 is located. That is, the edge sealing portion 212 is closer to the first surface 2111.

In some embodiments, along the first direction X, two first surfaces 2111 or two second surfaces 2112 of any two adjacent accommodation portions 211 are disposed opposite to each other.

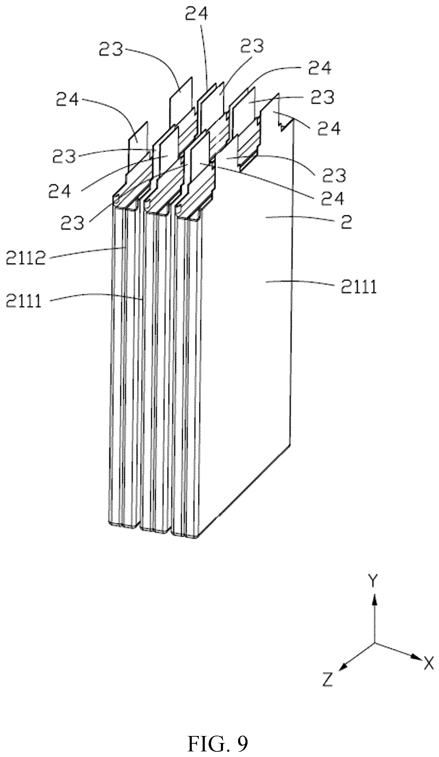

Referring to FIG. 9, in an embodiment, the cells 2 stacked along the first direction X are stacked in such a sequence that the two second surfaces 2112 are disposed opposite to each other and the two first surfaces 2111 are disposed opposite to each other.

In some embodiments, along the first direction X, the first terminal 23 of any one cell 2 is electrically connected to the second terminal 24 of another cell 2 opposite to the first surface 2111 of the cell 2.

In some embodiments, along the first direction X, the second terminal 24 of any one cell 2 is electrically connected to the first terminal 23 of a cell 2 opposite to the second surface 2112 of the cell 2.

In some embodiments, along the first direction X, the first terminal 23 of the cell 2 may be further connected to the first terminal 23 of another cell 2 that is adjacent.

Referring to FIG. 2 and FIG. 9, in some embodiments, along the first direction X, the first terminal 23 of one outermost cell 2 is further connected to the first connecting piece 61, and the second terminal 24 of the other outermost cell 2 is further connected to the second connecting piece 62. The first connecting piece 61 and the second connecting piece 62 are configured to connect external devices. The cell 2 includes a plurality of cells 2 located between the two outermost cells 2. The first terminal 23 of one of the cells 2 is electrically connected to the second terminal 24 of another cell 2 opposite to the first surface 2111 of said cell 2. The second terminal 24 of one of the cells is electrically connected to the first terminal 23 of a cell 2 opposite to the second surface 2112 of said cell 2.

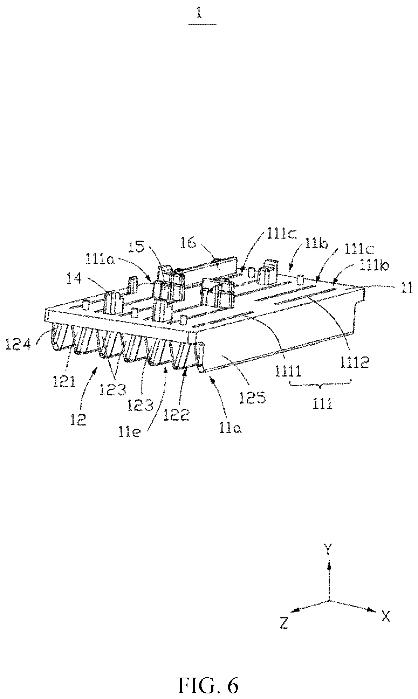

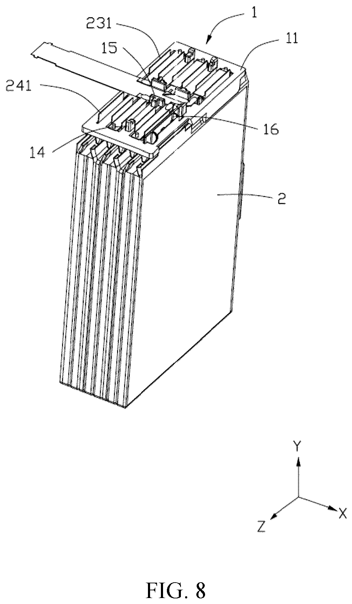

As shown in FIG. 6, FIG. 7, and FIG. 8, the bracket 1 includes a base plate 11 and plurality of groups of protruding portions 12 spaced apart. The base plate 11 is approximately a plate-like structure parallel to a plane formed by the first direction X and the third direction Z. The third direction Z is perpendicular to the first direction X. The base plate 11 includes a first side 11a and a second side 11b that are disposed opposite to each other along a second direction Y. The plurality of groups of protruding portions 12 spaced apart are disposed on the first side 11a of the base plate 11. The second direction Y is perpendicular to a plane formed by the first direction X and the third direction Z.

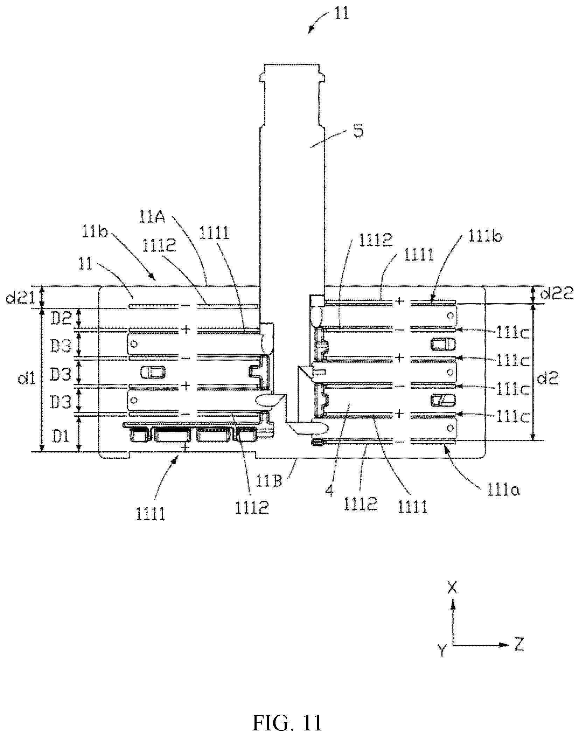

Referring to FIG. 6 and FIG. 11, a plurality of groups of through-holes 111 arranged along the first direction X are disposed on the base plate 11. The through-holes 111 penetrate the base plate 11 along the second direction Y. At least a part of the through-holes 111 are disposed on the base plate 11 in an elongated shape after extending along the third direction Z. The length of the through-hole 111 along the first direction X is less than the length of the through-hole 111 along the third direction Z. The part of through-holes 111 includes a first terminal through-hole 1111 and a second terminal through-hole 1112 disposed in sequence along the third direction Z. The part of through-holes 111 includes a first terminal through-hole 1111 and a second terminal through-hole 1112 that are disposed in sequence along an opposite direction of the third direction Z. The first terminal 23 and the second terminal 24 of the same cell 2 pass through the first terminal through-hole 1111 and the second terminal through-hole 1112 in the same group respectively.

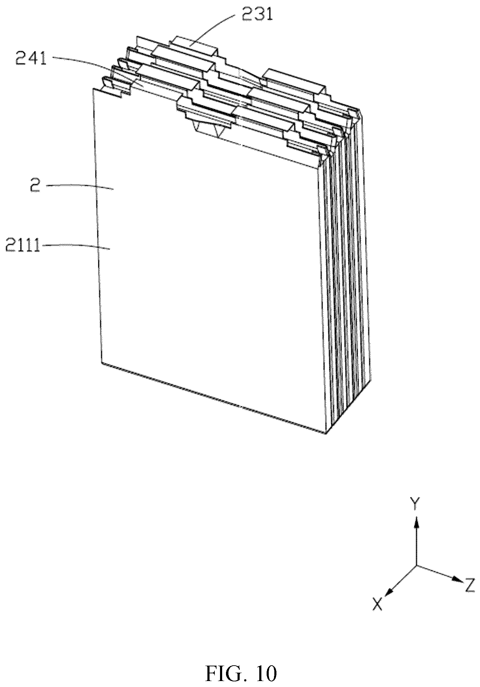

Referring to FIG. 10, in some embodiments, the first terminal 23 includes a first terminal connecting portion 231 that has passed through the first terminal through-hole 1111. The second terminal 24 includes a second terminal connecting portion 241 that has passed through the second terminal through-hole 1112. The first terminal connecting portion 231 and the second terminal connecting portion 241 are located on the second side 11b of the base plate 11.

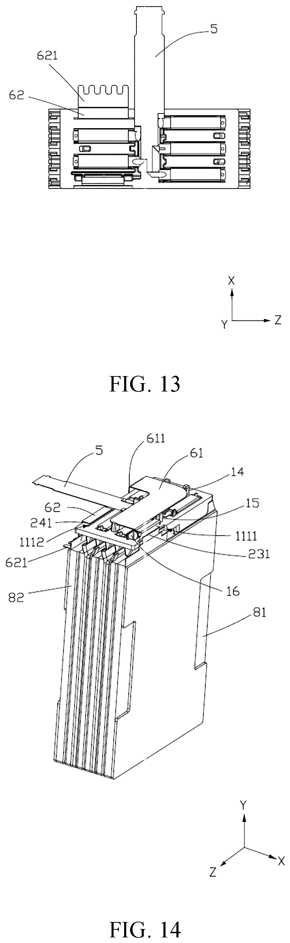

Referring to FIG. 11 and FIG. 14, in some embodiments, the plurality of groups of through-holes 111 include a first group of through-holes 111a, a second group of through-holes 111b, and third groups of through-holes 111c located between the first group of through-holes 111a and the second group of through-holes 111b, the three group of through-holes being disposed along the first direction X. The number of the third groups of through-holes 111c is at least two.

In an embodiment, the first terminal 23 passes through the first terminal through-hole 1111 in the first group of through-holes 111a. The first terminal connecting portion 231 of the first terminal 23 is connected to the first connecting piece 61. The second terminal 24 passes through the second terminal through-hole 1112 in the second group of through-holes 111b. The second terminal connecting portion 241 of the second terminal 24 is connected to the second connecting piece 62.

Along the first direction X, a distance between the first terminal through-hole 1111 in the first group of through-holes 111a and the second terminal through-hole 1112 in the adjacent third group of through-holes 111c is D1. Among two adjacent third groups of through-holes 111c, the second terminal through-hole 1112 in one group and the first terminal through-hole 1111 in the other group are disposed opposite to each other along the first direction X. A distance between the two terminal through-holes is D3, and D1 is greater than D3. Such arrangement increases the distance between the first terminal 23 inside the first terminal through-hole 1111 in the first group of through-holes 111a and the second terminal 24 inside the second terminal through-hole 1112 in the adjacent third group of through-holes 111c, reduces risks of short circuits between the first terminal 23 and the second terminal 24, increases the connection area, and makes it convenient to dispose the first connecting piece 61, thereby reducing risks of short circuits between the first connecting piece 61 and the second terminal 24 inside the adjacent third group of through-holes 111c.

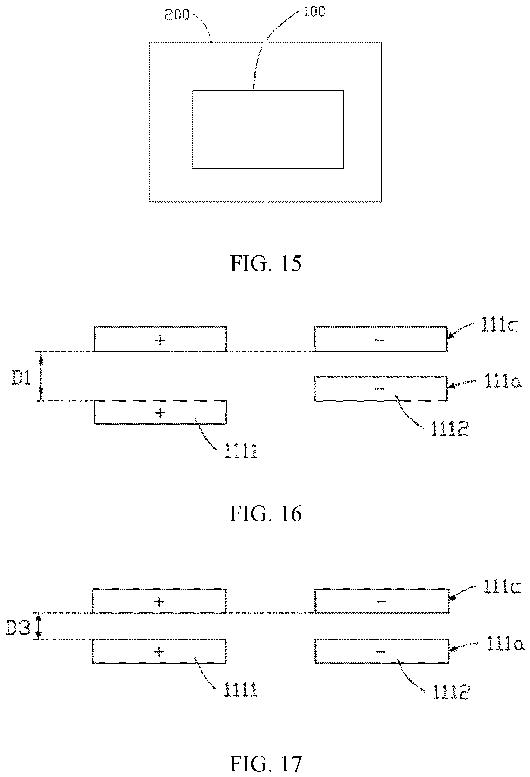

Referring to FIG. 16 and FIG. 17, in an embodiment, along the first direction X, a distance between the first terminal through-hole 1111 in the first group of through-holes 111a and a first terminal through-hole 1111 in the adjacent third group of through-holes 111c is D1. Along the first direction X, among two adjacent third groups of through-holes 111c, the first terminal through-hole 1111 in one group and the first terminal through-hole 1111 in the other group are disposed opposite to each other along the first direction X, and a distance between the two first terminal through-holes is D3.

In an embodiment, a difference between D1 and D3 is greater than 6 mm, thereby helping to increase the connection area between the first connecting piece 61 and the first terminal 23, and reinforce a weld region between the first connecting piece 61 and the first terminal 23.

In an embodiment, the base plate 11 includes a first lateral edge 11A and a second lateral edge 11B. Along the first direction X, an end that is of the first terminal through-hole 1111 in the first group of through-holes 111a and that is oriented away from the second group of through-holes 111b penetrates the second lateral edge 11B of the base plate 11. This makes it convenient to fold outward the first terminal connecting portion 231 disposed inside the first terminal through-hole 1111 in the first group of through-holes 111a, and weld the first terminal connecting portion to the first connecting piece 61.

The distance between the second terminal through-hole 1112 in the second group of through-holes 111b and the first terminal through-hole 1111 of the adjacent third group of through-holes 111c is D2, and D2 is less than D3, thereby reducing the distance between the second group of through-holes 111b and the adjacent third group of through-holes 111c, and adjusting the distance between the first terminal through-hole 1111 in the first group of through-holes 111a and the second group of through-holes 111b.

In an embodiment, the base plate 11 includes a first lateral edge 11A and a second lateral edge 11B. Along the first direction X, a distance between the second terminal through-hole 1112 in the second group of through-holes 111b and the first lateral edge 11A of the base plate 11 is d21, and a distance between the first terminal through-hole 1111 in the second group of through-holes 111b to the first lateral edge 11A of the base plate 11 is d22, and d21 is greater than d22. This helps to increase the distance between the second terminal through-hole 1112 in the second group of through-holes 111b and the first lateral edge 11A of the base plate 11, and facilitates welding between the second terminal connecting portion 241 and the second connecting piece 62. Optionally, d21 is greater than d22 by 2 mm to 4 mm.

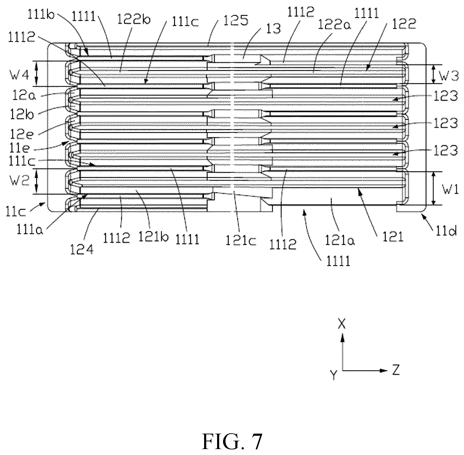

Referring to FIG. 6 and FIG. 7, the plurality of groups of protruding portions 12 and the base plate 11 are integrally formed by injection molding. The plurality of groups of protruding portions 12 are disposed in sequence and spaced out on the first side 11a of the base plate 11 along the first direction X, and the plurality of groups of protruding portions 12 extend along the third direction Z on the surface of the base plate 11. The plurality of groups of interstices are formed between the plurality of groups of protruding portions 12. Viewed along the second direction Y, the through-hole 111 is located between two adjacent protruding portions 12. The through-hole 111 communicates with the interstices. One through-hole 111 exists between any two adjacent protruding portions 12.

When the plurality of cells 2 are stacked and disposed on the bracket 1, each group of through-holes 111 corresponds to one cell 2. Specifically, the first terminal 23 and the second terminal 24 of the same cell 2 penetrate into the first terminal through-hole 1111 and the second terminal through-hole 1112 in each group of through-holes 111 respectively. A part of the first terminal 23, a part of the second terminal 24, and the edge sealing portion 212 of the cell 2 are located between the two adjacent protruding portions 12. In some embodiments, after the first terminal 23 passes through the first terminal through-hole 1111 and after the second terminal 24 passes through the second terminal through-hole 1112, the first terminal connecting portion 231 of the first terminal 23 and the second terminal connecting portion 241 of the second terminal 24 can bend to implement series or parallel connection between adjacent cells 2.

Further, in an opposite direction of the second direction Y, the width of each group of protruding portions 12 in the first direction X decreases gradually. To be specific, a cross-sectional shape of the protruding portion 12 in the third direction Z is approximately V-shaped. The tip of the V shape is oriented facing away from the base plate 11 along the second direction Y. The width of the interstice between two adjacent protruding portions 12 in the first direction X decreases gradually along the second direction Y. Understandably, when the first terminal 23 and the second terminal 24 move into the interstice between the two protruding portions 12, the surface of the protruding portions 12 can guide the movement of the first terminal 23 and the second terminal 24, and guide the first terminal 23 and the second terminal 24 to move closer to the base plate 11 until penetrating into the through-hole 111.

In some embodiments, a minimum distance between two adjacent protruding portions 12 is equal to the width of the through-hole 111 along the first direction X.

In an embodiment, viewed along the second direction Y, the plurality of groups of protruding portions 12 include a first group of protruding portions 121, a second group of protruding portions 122, and a third group of protruding portions 123. The first group of protruding portions 121 is located between the first group of through-holes 111a and the adjacent third group of through-holes 111c. The second group of protruding portions 122 is located between the second group of through-holes 111b and the third group of through-holes 111c adjacent to the second group of through-holes 111b. The third group of protruding portions 123 is located between two adjacent third groups of through-holes 111c, and located between the first group of protruding portions 121 and the second group of protruding portions 122.

Viewed along the second direction Y, the first group of protruding portions 121 includes a first part 121a and a second part 121b, the first part 121a located between the first terminal through-hole 1111 in the first group of through-holes 111a and the second terminal through-hole 1112 in the third group of through-holes 111c adjacent to the first group of through-holes, the second part 121b located between the second terminal through-hole 1112 in the first group of through-holes 111a and the first terminal through-hole 1111 in the third group of through-holes 111c adjacent to the first group of through-holes. Projected along the second direction Y, a width of a projection of the first part 121a on the base plate 11 along the first direction X is W1, a width of a projection of the second part 121b on the base plate 11 along the first direction X is W2, and W1 is greater than W2. This helps the first terminal 23 of the first part 121a to keep away from the second terminal 24 inside the adjacent third group of through-holes 111c along the first direction X, increases the distance between the first terminal 23 and the second terminal 24, and reduces risks of short circuits between the first terminal 23 and the second terminal 24.

When the first terminal 23 and the second terminal 24 of the same cell 2 abut on the first part 121a and the second part 121b, respectively, the cell 2 moves closer to the base plate 11 along the second direction Y. The first part 121a and the second part 121b can serve a function of guidance, and guide the first terminal 23 and the second terminal 24 to move closer to the base plate 11 until penetrating into the first terminal through-hole 1111 and the second terminal through-hole 1112, respectively.

In some embodiments, along the first direction X, a distance between the first part 121a and the second group of protruding portions 122 is equal to a distance between the second part 121b and the second group of protruding portions 122.

Viewed along the second direction Y, the second group of protruding portions 122 includes a third part 122a and a fourth part 122b , the third part 122a located between the second terminal through-hole 1112 in the second group of through-holes 111b and the first terminal through-hole 1111 in the third group of through-holes 111c adjacent to the second group of through-holes, and the fourth part 122b located between the first terminal through-hole 1111 in the second group of through-holes 111b and the second terminal through-hole 1112 in the third group of through-holes 111c adjacent to the second group of through-holes. Projected along the second direction Y, a width of a projection of the third part 122a on the base plate 11 along the first direction X is W3, a width of a projection of the fourth part 122b on the base plate 11 along the first direction X is W4, and W3 is less than W4. During the assembling, such an arrangement helps to provide a guidance and achieve the following effects: the second terminal 24 inside the second terminal through-hole 1112 in the second group of through-holes 111b is disposed close to the adjacent third group of through-holes 111c; and the distance between the first terminal through-hole 1111 in the second group of through-holes 111b and the adjacent third group of through-holes 111c is equal to D3.

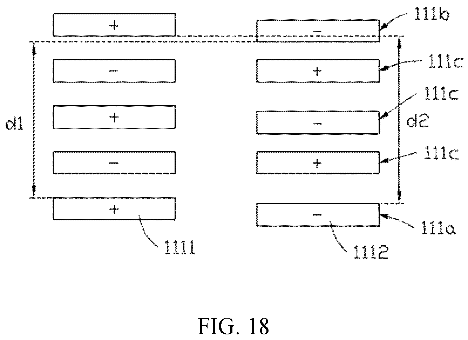

In an embodiment, the difference between D1 and D3 is equal to the difference between D3 and D2. The distance between the first terminal through-hole 1111 in the second group of through-holes 111b and the adjacent third group of through-holes 111c is equal to D3, and the distance between the second terminal through-hole 1112 in the first group of through-holes 111a and the adjacent third group of through-holes 111c is equal to D3. Referring to FIG. 18, along the first direction X, a distance between the first terminal through-hole 1111 in the first group of through-holes 111a and the second group of through-holes 111b is d1, a distance between the second terminal through-hole 1112 in the first group of through-holes 111a and the second group of through-holes 111b is d2, and d1 is equal to d2, thereby helping to make the following two lengths consistent by cutting: a length by which the first terminal 23 extends beyond the cell housing 21, and a length by which the second terminal 24 extends beyond the cell housing 21, and facilitating production.

In an embodiment, the first group of protruding portions 121 further includes a fifth part 121c. The fifth part 121c is connected to the first part 121a and the second part 121b. Along the second direction Y, a width of a projection of the fifth part 121c on the base plate 11 along the first direction X increases gradually from an end connected to the second part 121b to an end connected to the first part 121a. A lateral surface that is of the fifth part 121c and that is oriented facing away from the second group of protruding portions 122 is smoothly connected to a lateral surface that is of the first part 121a and that is oriented facing away from the second group of protruding portions 122, and is configured to guide a part of the structure of the edge sealing part 212 from the second part 121b to the first part 121a.

Understandably, the protruding portion 12 further includes a fourth group of protruding portions 124 and a fifth group of protruding portions 125. The fourth group of protruding portions 124 is disposed and spaced out along the first direction X on a side that is of the first group of protruding portions 121 and that is oriented away from the third group of protruding portions 123. The second terminal through-hole 1112 in the first group of through-holes 111a is located between the first group of protruding portions 121 and the fourth group of protruding portions 124. The fourth group of protruding portions 124 fits with the adjacent first group of protruding portions 121 to form interstices, so as to guide the second terminal 24. The fifth group of protruding portions 125 is disposed and spaced out along the first direction X on a side that is of the second group of protruding portions 122 and that is oriented away from the third group of protruding portions 123. The first terminal through-hole 1111 and the second terminal through-hole 1112 in the second group of through-holes 111b are located between the second group of protruding portions 122 and the fifth group of protruding portions 125. The fifth group of protruding portions 125 fits with the adjacent first group of protruding portions 121 to form interstices, so as to guide the first terminal 23 and the second terminal 24. Understandably, the lateral edges that are of the fourth group of protruding portions 124 and the fifth group of protruding portions 125 and that are close to the base plate 11 are in the same plane as the lateral edge of the base plate 11 in the second direction Y.

The base plate 11 further includes a third side 11c and a fourth side 11d that are disposed opposite to each other along the third direction Z. The base plate 11 further includes an opening 11e made on the third side 11c. Along the third direction Z, the opening 11e communicates with a plurality of groups of interstices between the plurality of groups of protruding portions 12. The first terminal 23 and the second terminal 24 enter the space between the two adjacent groups of protruding portions 12 along the third direction Z from an opening 11e on the third side 11c of the base plate 11.

In an embodiment, a first beveled face 12a and a second beveled face 12b are disposed at ends that are of the plurality of groups of protruding portions 12 and that are located on the third side 11c. The first beveled face 12a and the second beveled face 12b are disposed toward the interstices between adjacent protruding portions 12. A distance between the first beveled face 12a and the second beveled face 12b of the same group of protruding portions 12 along the first direction X increases gradually from the third side 11c to the fourth side 11d. To be specific, along the first direction X, the distance between the first beveled face 12a and the second beveled face 12b of the protruding portion 12 adjacent to the first beveled face decreases gradually from the third side 11c to the fourth side 11d, so as to make the opening 11e flare out. In this way, the first terminal 23 and the second terminal 24 can be conveniently guided into the interstices between the two adjacent groups of protruding portions 12, and the success rate of docking the cell 2 to the bracket 1 is increased.

Understandably, on the fourth side 11d, an opening 11e and a corresponding beveled face may also be disposed and configured to guide the first terminal 23 and the second terminal 24 into the interstices between the two groups of protruding portions 12.

Understandably, in a process of plugging the first terminal 23 and the second terminal 24 into the bracket 1, the first terminal 23 and the second terminal 24 enter the two adjacent protruding portions 12 first from the opening 11e on the third side 11c along the third direction Z. The first terminal 23 and the second terminal 24 continue to move along the second direction Y. During the movement, the width of the interstice between the two adjacent protruding portions 12 in the first direction X decreases gradually along the second direction Y. At the same time, the first terminal 23 and the second terminal 24 are guided along the first direction X and the second direction Y until moving to the preset position. Subsequently, the first terminal 23 is plugged into the first terminal through-hole 1111 and the second terminal 24 is plugged into the second terminal through-hole 1112 along the second direction Y. During the movement along the second direction Y, the outer surface of the protruding portion 12 guides the first terminal 23 and the second terminal 24 into the through-hole 111, thereby helping to improve the success rate of plugging.

The bracket 1 further includes a partitioning portion 13. The partitioning portion 13 is disposed between the first terminal through-hole 1111 and the second terminal through-hole 1112 in the same group of through-holes 111. After the first terminal 23 and the second terminal 24 of the cell 2 pass through the first terminal through-hole 1111 and the second terminal through-hole 1112 respectively, the partitioning portion 13 is located between the first terminal connecting portion 231 and the second terminal connecting portion 241. Understandably, the partitioning portion 13 can reduce the probability of other foreign substances dropping into a space between the first terminal through-hole 1111 and the second terminal through-hole 1112 in the same group, thereby reducing the risk of a short circuit between the first terminal 23 and the second terminal 24 caused by the foreign substances. Optionally, the partitioning portion 13 can enhance structural strength of the bracket 1.

As shown in FIG. 9 and FIG. 10, after passing through the through-hole 111, the first terminal 23 and the second terminal 24 are bent toward each other and connected together. By bending in this way, the plurality of cells 2 can be connected in series or parallel.

Understandably, along the first direction X, among two outermost cells 2, the first terminal 23 of one cell 2 and the second terminal 24 of the other cell 2 are not connected in series to the adjacent cell 2. Such first terminal 23 and second terminal 24 can be electrically connected to an external device by serving as an output end of the series circuit.

In this application, an outer side means a side oriented back from the stacking center. The two outermost cells 2 mean the two cells 2 located at two ends of the first direction X among the stacked cells 2.

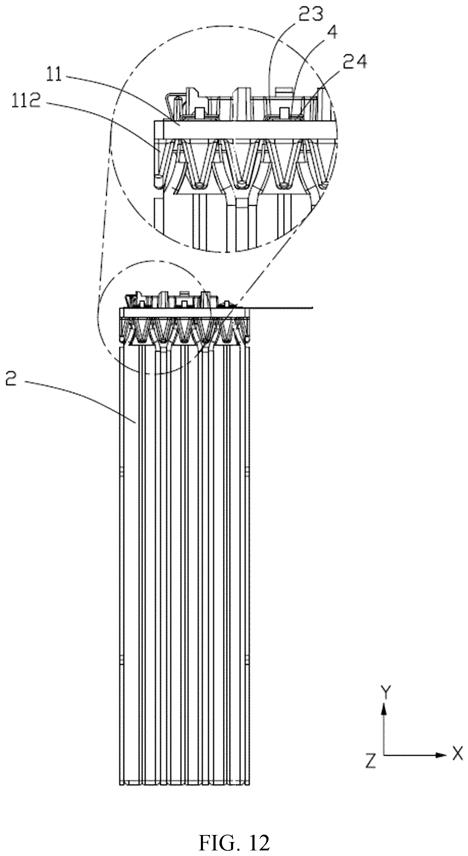

As shown in FIG. 11 and FIG. 12, the battery module 100 further includes a conductive piece 4 and a sampling piece 5. The conductive piece 4 and the sampling piece 5 are disposed on the second side 11b of the base plate 11.

Viewed from an opposite direction of the second direction Y, the conductive piece 4 is disposed between the first terminal through-hole 1111 and the second terminal through-hole 1112 that are adjacently disposed along the first direction X. The first terminal connecting portion 231 and the second terminal connecting portion 241 are connected to the conductive piece 4. Along the first direction X, the lengths of the conductive pieces 4 are identical. In this way, the areas of welding the first terminal connecting portion 231 and the second terminal connecting portion 241 to the conductive piece 4 are the same between adjacent cells 2, thereby helping to keep consistency of the cells 2 and improve the service life of the battery module 100.

When the first terminal 23 and the second terminal 24 adjacent to each other along the first direction X are bent toward each other, the bent second terminal 24 is located at a lower position. The second terminal 24 abuts on and is electrically connected to the conductive piece 4. The first terminal 23 abuts on and is electrically connected to the second terminal 24.

Understandably, when the bent first terminal 23 is located below the second terminal 24, the first terminal 23 abuts on and is electrically connected to the conductive piece 4. The second terminal 24 abuts on and is electrically connected to the first terminal 23.

One end of the sampling piece 5 is connected to the base plate 11 and electrically connected to all the conductive pieces 4, and another end protrudes beyond the base plate 11. The sampling piece 5 electrically connects the plurality of conductive pieces 4 to all the cells 2, so as to be able to collect and transmit data information on safety circuit boards of all the cells 2.

In this application, the conductive piece 4 and the sampling piece 5 are prearranged on the bracket 1, and the sampling piece 5 is welded onto the conductive piece 4. When the first terminal 23 and the second terminal 24 of the cell 2 penetrate into the through-hole 111 and are connected to the bracket 1, the sampling piece 5 is connected to all the cells 2, thereby improving the work efficiency.

In some embodiments, the sampling piece 5 includes a sampling line.

In some embodiments, the conductive piece 4 includes a metal material.

As shown in FIG. 13 and FIG. 14, the two outermost cells 2 are the first cell 81 and the second cell 82. The second terminal 24 on the first cell 81 is not connected to the first terminal 23 of the adjacent cell 2. The first terminal 23 on the second cell 82 is not connected to the second terminal 24 of the adjacent cell 2.

One end of the first connecting piece 61 is connected to the first terminal connecting portion 231 of the first terminal 23 of the first cell 81, and another end protrudes out of the bracket 1 from outside of the first cell 81. One end of the second connecting piece 62 is electrically connected to the second terminal connecting portion 241 of the second terminal 24 of the second cell 82, and another end protrudes out of the bracket 1 from outside of the second cell 82.

A first connecting portion 611 is disposed at an end that is of the first connecting piece 61 and that is oriented away from the first cell 81. A second connecting portion 621 is disposed at an end that is of the second connecting piece 62 and that is oriented away from the second cell 82. The first connecting portion 611 and the second connecting portion 621 protrude from the same side of the stacked cells 2, and protrude from the same side as the sampling piece 5. Understandably, the first connecting portion 611, the second connecting portion 621, and the sampling piece 5 are led out from the same side, thereby facilitating connection to an external device and improving space efficiency. In other embodiments, the first connecting portion 611 and the second connecting portion 621 are disposed on different sides of the bracket 1.

In some embodiments, a first insulation rod 14 and a second insulation rod 15 are further disposed on the bracket 1. The first insulation rod 14 and the second insulation rod 15 are disposed on the second side 11b of the base plate 11.

One end of the first insulation rod 14 is fixedly connected to the base plate 11, and another end abuts on the first connecting piece 61. The first connecting piece 61 is electrically connected to the bent first terminal 23, thereby reducing the probability of short circuits. In some embodiments, the number of the first insulation rods 14 is plural, and the plurality of first insulation rods 14 are evenly distributed on the surface of the base plate 11. Understandably, the plurality of first insulation rods 14 can well support the first connecting piece 61, and reduce the probability of a short circuit caused by contact between the first connecting piece 61 and the bent first terminal 23 or second terminal 24.

One end of the second insulation rod 15 is fixedly connected to the base plate 11, and another end abuts on a lateral face and a bottom face of the first connecting piece 61. A support face and an abutment face are provided on the second insulation rod 15. The support face abuts on a side that is of the first connecting piece 61 and that is close to the base plate 11. The abutment face abuts on the lateral face of the first connecting piece 61. In some embodiments, the number of the second insulation rods 15 is plural, and the plurality of second insulation rods 15 are disposed on two sides of the first connecting piece 61 along the second direction Y. Understandably, the plurality of second insulation rods 15 not only supports the first connecting piece 61 and reduces the risks of short circuits caused by contact between the first connecting piece 61 and the bent first terminal 23 or second terminal 24, but also brings a good position-limiting effect to limit the displacement of the first connecting piece 61 along the second direction Y.

An insulation block 16 is further disposed on the bracket 1. The insulation block 16 is disposed on the second side 11b of the base plate 11, and is located between the first terminal through-hole 1111 in the first group of through-holes 111a and the adjacent third group of through-holes 111c. The length of the insulation block 16 along the third direction Z is greater than the length of the through-hole 111 on the either side of the insulation block 16 along the third direction Z. The insulation block 16 is disposed protrusively on the base plate 11 along the second direction Y, and is configured to carry the first connecting piece 61 and obstruct the first connecting piece 61 and the first terminal 23 welded on the first connecting piece 61 from contacting the adjacent second terminal 24, thereby reducing risks of short circuits between the first connecting piece 61 and the second terminal 24 in the third group of through-holes 111c.

In some embodiments, the first connecting piece 61 and the second connecting piece 62 are made of a metal material.

In some embodiments, the first insulation rod 14 and the second insulation rod 15 are made of an insulation material.

Still referring to FIG. 1 and FIG. 2, the battery module 100 further includes a first filler 71 and a second filler 72.

The first filler 71 fill in the space between two opposite first surfaces 2111, and the two ends of the first filler 71 abut on the two first surfaces 2111 respectively. Understandably, the first filler 71 can cause two opposite first surfaces 2111 to abut against each other, so as to reduce the risks of short circuits between the two cells 2 corresponding to the two first surfaces 2111.

The second filler 72 is disposed between the shell 3 and the stacked cells 2. Understandably, the second filler 72 can reduce risks of shaking of the cells 2 inside the packaged battery module 100.

In some embodiments, the first filler 71 and the second filler 72 are foam.

In some embodiments, a third through-hole 321, a fourth through-hole 322, and a fifth through-hole 323 are disposed on the second shell body 32. The third through-hole 321 corresponds to the first connecting portion 611. The fourth through-hole 322 corresponds to the second connecting portion 621. The third through-hole 321 and the fourth through-hole 322 are penetrable to the first connecting portion 611 and the second connecting portion 621 respectively. The fifth through-hole 323 corresponds to the sampling piece 5. The fifth through-hole 323 is penetrable to the sampling piece 5.

The first connecting portion 611, the second connecting portion 621, and the sampling piece 5 protrude out of the second shell body 32 through the third through-hole 321, the fourth through-hole 322, and the fifth through-hole 323, respectively, so as to be able to connect to external devices and transmit electrical energy of the stacked cells 2 and data information on safety circuit boards of all the cells 2.

Referring to FIG. 11, in this embodiment, the number of cells 2 is an even number. The first terminal through-hole 1111 in the first group of through-holes 111a and the second terminal through-hole 1112 in the second group of through-holes 111b are disposed opposite to each other along the first direction X. Along the first direction X, the projection of the first terminal through-hole 1111 at least partly overlaps the projection of the second terminal through-hole 1112. Referring to FIG. 18, in other embodiments, the number of cells 2 is an odd number. The first terminal through-hole 1111 in the first group of through-holes 111a and the first terminal through-hole 1111 in the second group of through-holes 111b are disposed opposite to each other along the first direction X.

Referring to FIG. 11, in this embodiment, the plurality of cells 2 are connected in series. Between the plurality of adjacent groups of through-holes 111c, the first terminal through-hole 1111 and the second terminal through-hole 1112 are disposed opposite to each other along the first direction X. Along the first direction X, the projection of the first terminal through-hole 1111 at least partly overlaps the projection of the second terminal through-hole 1112.

In other embodiments, between the plurality of adjacent groups of through-holes 111c, the first terminal through-hole 1111 may be separated from the second terminal through-hole 1112 along the first direction X. Along the first direction X, the projection of the first terminal through-hole 1111 may be separated from the projection of the second terminal through-hole 1112.

Referring to FIG. 15, this application further provides an electrical device 200 containing the battery module 100 according to any one of the foregoing some embodiments. The battery module 100 is ready for use after being connected to the electrical device through a line. In an embodiment, the electrical device 200 according to this application may be, but without being limited to: a pen-inputting computer, a mobile computer, a portable fax machine, a portable photocopier, a portable printer, a stereo headset, a video recorder, a liquid crystal display television set, a handheld cleaner, a transceiver, an electronic notepad, a calculator, a backup power supply, a motor, an electric vehicle, an electric motorcycle, a power-assisted bicycle, an electric tool, a large household battery, or the like.

To sum up, in the battery module 100 and the electrical device 200 according to this application, the first terminal 23 and the second terminal 24 are guided along the third direction Z from the lateral edge to the interstice between the two adjacent protruding portions 12 first. The width of the interstice between the two adjacent protruding portions 12 in the first direction X is made to decrease gradually along the second direction Y. Further, along the first direction X and the second direction Y, the first terminal 23 and the second terminal 24 are guided to be plugged into the through-hole 111, thereby improving the assembling efficiency. The first beveled face 12a and the second beveled face 12b are disposed at the ends of the plurality of groups of protruding portions 12. The distance between the first beveled face 12a and the second beveled face 12b along the first direction X increases gradually from the third side 11c to the fourth side 11d. This makes it convenient to guide the first terminal 23 and the second terminal 24 into the interstice between two adjacent groups of protruding portions 12, and improves the success rate of docking the battery cell 2 to the bracket 1. The protruding portion 12 is located between the first terminal 23 and the second terminal 24 that are adjacent to each other, and can serve a function of insulation. By increasing the distance between the first terminal through-hole 1111 in the first group of through-holes 111a and the second terminal through-hole 1112 in the third group of through-holes 111c adjacent to the first group of through-holes, this application increases the distance between the first terminal connecting portion 231 connected and the first connecting piece 61 and the adjacent second terminal connecting portion 241, thereby reducing risks of short circuits caused by deficient spacing between the first terminal connecting portion 231 and the second terminal connecting portion 241.

## Claims

1. A battery module (100), comprising:
a plurality of cells (2), stacked along a first direction (X), wherein each cell (2) comprises a first terminal (23) and a second terminal (24), and a polarity of the first terminal (23) is opposite to a polarity of the second terminal (24);
a bracket (1) comprising a plurality of groups of through-holes (111), wherein each group of through-holes (111) comprises a first terminal through-hole (1111) and a second terminal through-hole (1112), and the first terminal (23) and the second terminal (24) of a same cell (2) pass through the first terminal through-hole (1111) and the second terminal through-hole (1112) in a same group of through-holes (111) respectively;
the first terminal (23) includes a first terminal connecting portion (231) that passes through the first terminal through-hole (1111);
wherein, the plurality of groups of through-holes (111) comprise a first group of through-holes (111a), a second group of through-holes (111b), and a plurality of third groups of through-holes (111c) located between the first group of through-holes (111a) and the second group of through-holes (111b) ;
along the first direction (X), a distance D1 between the first terminal through-hole (1111) in the first group of through-holes (111a) and the second terminal through-hole (1112) in a third group of through-holes (111c) adjacent to the first group of through-holes (111a) is greater than a distance D3 between two adjacent third groups of through-holes (111c);
along the first direction (X), the battery module (100) comprises two outermost cells (2), the two outermost cells (2) are a first cell (81) and a second cell (82), the first cell (81) is the first cell (2) along the first direction (X) and the second cell (82) is the last cell (2) along the first direction (X);
the first terminal (23) of the second cell (82) passes through the first terminal through-hole (1111) in the first group of through-holes (111a), **characterized in that** the first terminal connecting portion (231) of the second cell (82) is oriented towards the cell (2) adjacent to the second cell (82);
the first terminal connecting portion (231) of the second cell (82) is connected to a first connecting piece (61), and
the first terminal (231) of the second cell (82) is further electrically connected, to the first connecting piece (61) configured to connect external devices.

2. The battery module (100) according to claim 1, wherein, in the two adjacent third groups of through-holes (111c), a distance between the first terminal through-hole (1111) in one of the two adjacent third groups of through-holes (111c) and the second terminal through-hole (1112) in the other of the two adjacent third groups of through-holes (111c) is D3;
the first terminal through-hole (1111) in the one of the two adjacent third groups of through-holes (111c) and the second terminal through-hole (1112) in the other of the two adjacent third groups of through-holes (111c) are disposed opposite to each other along the first direction (X).

3. The battery module (100) according to claim 1 or 2, wherein a difference between D1 and D3 is greater than 6 mm.

4. The battery module (100) according to any one of claims 1 to 3, wherein a distance between the second terminal through-hole (1112) in the second group of through-holes (111b) and the first terminal through-hole (1111) in a third group of through-holes (111c) adjacent to the second group of through-holes (111b) is D2, and D2 is less than D3.

5. The battery module (100) according to any one of claims 1 to 4, wherein, along the first direction (X), a distance d1 between the first terminal through-hole (1111) in the first group of through-holes (111a) and the second terminal through-hole (1112) in the second group of through-holes (111b) is equal to a distance d2 between the second terminal through-hole (1112) in the first group of through-holes (111a) and the first terminal through-hole (1111) in the second group of through-holes (111b).

6. The battery module (100) according to any one of claims 1 to 5, wherein the bracket (1) further comprises a base plate (11) and a plurality of groups of protruding portions (12), the plurality of groups of protruding portions (12) are spaced apart from each other;
the base plate (11) comprises a first side (11a) and a second side (11b), the first side (11a) and the second side (11b) are disposed opposite to each other along a second direction (Y), and the plurality of groups of protruding portions (12) are located on the first side of the base plate (11), the second direction (Y) being perpendicular to the first direction (X);
viewed along the second direction (Y), the plurality of groups of protruding portions (12) comprise a first group of protruding portions (121) located between the first group of through-holes (111a) and the third group of through-holes (111c) adjacent to the first group of through-holes (111a), a second group of protruding portions (122) located between the second group of through-holes (111b) and the third group of through-holes (111c) adjacent to the second group of through-holes (111b), and a third group of protruding portions (123) located between the first group of protruding portions (121) and the second group of protruding portions (122);
the first group of protruding portions (121) comprises a first part (121a) located between the first terminal through-hole (1111) in the first group of through-holes (111a) and the second terminal through-hole (1112) in the third group of through-holes (111c) adjacent to the first group of through-hole (111a), and a second part (121b) located between the second terminal through-hole (1112) in the first group of through-holes (111a) and the first terminal through-hole (1111) in the third group of through-holes (111c) adjacent to the first group of through-holes (111a); and
projected along the second direction (Y), a width of a projection of the first part (121a) on the base plate (11) along the first direction (X) is W1, a width of a projection of the second part on the base plate (11) along the first direction (X) is W2, and W1 is greater than W2.

7. The battery module (100) according to claim 6, wherein along the first direction (X), a distance between the first part (121a) and the second group of protruding portions (122) is equal to a distance between the second part (121b) and the second group of protruding portions (122).

8. The battery module (100) according to claim 6 or 7, wherein when viewed along the second direction (Y), the second group of protruding portions (122) comprises a third part (122a) located between a second terminal through-hole (1112) in the second group of through-holes (111b) and a first terminal through-hole (1111) in the third group of through-holes (111c) adjacent to the second group of through-holes (111b), and a fourth part (122b) located between a first terminal through-hole (1111) in the second group of through-holes (111b) and a second terminal through-hole (1112) in the third group of through-holes (111c) adjacent to the second group of through-holes (111b);
projected along the second direction (Y), a width of a projection of the third part (122a) on the base plate (11) along the first direction (X) is W3, a width of a projection of the fourth part (122b) on the base plate (11) along the first direction (X) is W4, and W3 is less than W4.

9. The battery module (100) according to any one of claims 6 to 8, wherein along the first direction (X), the base plate (11) comprises a second lateral edge (11B) and a first lateral edge (11A), a distance between the second terminal through-hole (1112) in the second group of through-holes (111b) and the first lateral edge (11A) is d21, a distance between the first terminal through-hole (1111) in the second group of through-holes (111b) and the first lateral edge (11A) is d22, and d21 is greater than d22.

10. The battery module (100) according to any one of claims 6 to 9, wherein along the first direction (X), the base plate (11) comprises a second lateral edge (11B) and a first lateral edge (11A); and an end of the first terminal through-hole (1111) in the first group of through-holes (111a) is oriented away from the second group of through-holes (111b) and penetrates the second lateral edge (11B).

11. The battery module (100) according to any one of claims 6 to 10, wherein the bracket (1) comprises a third side (11c) and a fourth side (11d), the third side (11c) and the fourth side (11d) are disposed opposite to each other along a third direction (Z);
the bracket (1) comprises an opening (11e) provided on the third side (11c), a plurality of groups of interstices are formed between the plurality of groups of protruding portions (12); and, along the third direction (Z), the opening (11e) communicates with the plurality of groups of interstices.

12. The battery module (100) according to any one of claims 6 to 11, wherein the first terminal (23) and the second terminal (24) are connected to each other by bending toward each other, the first terminal (23) comprises a first terminal connecting portion (231) passing through the first terminal through-hole (1111), and the second terminal (24) comprises a second terminal connecting portion (241) passing through the second terminal through-hole (1112);
the battery module (100) further comprises a plurality of conductive pieces (4), and the plurality of conductive pieces (4) are disposed on a side of the base plate (11), the side of the base plate (11) being a side oriented facing away from the protruding portion (12);
the first terminal connecting portion (231) and the second terminal connecting portion (241) are connected to the conductive piece (4); and
the bracket (1) further comprises a partitioning portion (13) located on the first side of the base plate (11), and the partitioning portion (13) is disposed between the first terminal through-hole (1111) and the second terminal through-hole (1112) in a same group of through-holes(111).

13. The battery module (100) according to claim 11, wherein the battery module (100) further comprises:
a first connecting piece (61), wherein one end of the first connecting piece (61) is connected to the first terminal (23), the first terminal (23) passes through the first terminal through-hole (1111) in the first group of through-holes (111a), and another end of the first connecting piece (61) comprises a first connecting portion (611); and
a second connecting piece (62), wherein one end of the second connecting piece (62) is connected to the second terminal (24), the second terminal (24) passes through the second terminal through-hole (1112) in the second group of through-holes (111b), another end of the second connecting piece (62) comprises a second connecting portion (621), and the first connecting portion (611) and the second connecting portion (621) are located on a same side of the base plate (11).

14. The battery module (100) according to claim 13, wherein the bracket (1) further comprises an insulation block (16), the insulation block (16) is disposed on the second side of the base plate (11) and is located between the first terminal through-hole (1111) in the first group of through-holes (111a) and an adjacent third group of through-holes (111c);
along the third direction (Z), a length of the insulation block (16) is greater than a length of the first terminal through-hole (1111) in the first group of through-holes (111a).

15. An electrical device (200), wherein the electrical device (200) comprises the battery module (100) according to any one of claims 1 to 14.

## Patentansprüche

1. Batteriemodul (100), umfassend:
eine Vielzahl von Zellen (2), die entlang einer ersten Richtung (X) gestapelt sind, wobei jede Zelle (2) einen ersten Anschluss (23) und einen zweiten Anschluss (24) umfasst und die Polarität des ersten Anschlusses (23) der Polarität des zweiten Anschlusses (24) entgegengesetzt ist;
eine Halterung (1), die eine Vielzahl von Gruppen von Durchgangslöchern (111) umfasst, wobei jede Gruppe von Durchgangslöchern (111) ein erstes Anschluss-Durchgangsloch (1111) und ein zweites Anschluss-Durchgangsloch (1112) umfasst, und der erste Anschluss (23) und der zweite Anschluss (24) derselben Zelle (2) jeweils durch das erste Anschluss-Durchgangsloch (1111) und das zweite Anschluss-Durchgangsloch (1112) in derselben Gruppe von Durchgangslöchern (111) verlaufen;
wobei der erste Anschluss (23) einen ersten Anschlussverbindungsabschnitt (231) umfasst, der durch das erste Anschlussdurchgangsloch (1111) verläuft;
wobei die mehreren Gruppen von Durchgangslöchern (111) eine erste Gruppe von Durchgangslöchern (111a), eine zweite Gruppe von Durchgangslöchern (111b) und mehrere dritte Gruppen von Durchgangslöchern (111c) umfassen, die sich zwischen der ersten Gruppe von Durchgangslöchern (111a) und der zweiten Gruppe von Durchgangslöchern (111b) angeordnet sind;
entlang der ersten Richtung (X) ist der Abstand D1 zwischen dem ersten Anschluss-Durchgangsloch (1111) in der ersten Gruppe von Durchgangslöchern (111a) und dem zweiten Anschluss-Durchgangsloch (1112) in einer dritten Gruppe von Durchgangslöchern (111c), die an die erste Gruppe von Durchgangslöchern (111a) angrenzt, größer ist als ein Abstand D3 zwischen zwei benachbarten dritten Gruppen von Durchgangslöchern (111c);
entlang der ersten Richtung (X) umfasst das Batteriemodul (100) zwei äußerste Zellen (2), die beiden äußersten Zellen (2) sind eine erste Zelle (81) und eine zweite Zelle (82), wobei die erste Zelle (81) die erste Zelle (2) entlang der ersten Richtung (X) ist und die zweite Zelle (82) die letzte Zelle (2) entlang der ersten Richtung (X) ist;
der erste Anschluss (23) der zweiten Zelle (82) durch das erste Anschluss-Durchgangsloch (1111) in der ersten Gruppe von Durchgangslöchern (111a) verläuft, **dadurch gekennzeichnet, dass** der erste Anschlussverbindungsabschnitt (231) der zweiten Zelle (82) auf die an die zweite Zelle (82) angrenzende Zelle (2) ausgerichtet ist;
der erste Anschlussverbindungsabschnitt (231) der zweiten Zelle (82) ist mit einem ersten Verbindungsstück (61) verbunden, und
der erste Anschluss (231) der zweiten Zelle (82) ist ferner elektrisch mit dem ersten Verbindungsstück (61) verbunden, das zum Anschluss externer Geräte ausgelegt ist.

2. Das Batteriemodul (100) nach Anspruch 1, wobei in den beiden benachbarten dritten Gruppen von Durchgangslöchern (111c) ein Abstand zwischen dem ersten Anschluss-Durchgangsloch (1111) in einer der beiden benachbarten dritten Gruppen von Durchgangslöchern (111c) und dem zweiten Anschluss-Durchgangsloch (1112) in der anderen der beiden benachbarten dritten Gruppen von Durchgangslöchern (111c) D3 beträgt; das erste Anschluss-Durchgangsloch (1111) in der einen der beiden benachbarten dritten Gruppen von Durchgangslöchern (111c) und das zweite Anschluss-Durchgangsloch (1112) in der anderen der beiden benachbarten dritten Gruppen von Durchgangslöchern (111c) sind entgegengesetzt zueinander entlang der ersten Richtung (X) angeordnet.

3. Das Batteriemodul (100) nach Anspruch 1 oder 2, wobei eine Differenz zwischen D1 und D3 größer als 6 mm ist.

4. Das Batteriemodul (100) nach einem der Ansprüche 1 bis 3, wobei ein Abstand zwischen dem zweiten Anschluss-Durchgangsloch (1112) in der zweiten Gruppe von Durchgangslöchern (111b) und dem ersten Anschluss-Durchgangsloch (1111) in einer dritten Gruppe von Durchgangslöchern (111c), die an die zweite Gruppe von Durchgangslöchern (111b) angrenzt, D2 beträgt, und D2 kleiner als D3 ist.

5. Das Batteriemodul (100) nach einem der Ansprüche 1 bis 4, wobei entlang der ersten Richtung (X) ein Abstand d1 zwischen dem ersten Anschluss-Durchgangsloch (1111) in der ersten Gruppe von Durchgangslöchern (111a) und dem zweiten Anschluss-Durchgangsloch (1112) in der zweiten Gruppe von Durchgangslöchern (111b) gleich einem Abstand d2 zwischen dem zweiten Anschluss-Durchgangsloch (1112) in der ersten Gruppe von Durchgangslöchern (111a) und dem ersten Anschluss-Durchgangsloch (1111) in der zweiten Gruppe von Durchgangslöchern (111b) ist.

6. Das Batteriemodul (100) nach einem der Ansprüche 1 bis 5, wobei der Träger (1) weiterhin eine Grundplatte (11) und eine Vielzahl von Gruppen von Vorsprüngen (12) aufweist, wobei die Vielzahl von Gruppen von Vorsprüngen (12) voneinander beabstandet ist; die Grundplatte (11) weist eine erste Seite (11a) und eine zweite Seite (11b) auf, wobei die erste Seite (11a) und die zweite Seite (11b) entgegengesetzt zueinander entlang einer zweiten Richtung (Y) angeordnet sind, und die Vielzahl von Gruppen von Vorsprüngen (12) sich auf der ersten Seite der Grundplatte (11) befinden, wobei die zweite Richtung (Y) senkrecht zur ersten Richtung (X) verläuft; in Ansicht entlang der zweiten Richtung (Y) umfasst die Vielzahl von Gruppen von Vorsprüngen (12) eine erste Gruppe von Vorsprüngen (121), die sich zwischen der ersten Gruppe von Durchgangslöchern (111a) und der dritten Gruppe von Durchgangslöchern (111c) angrenzend an die erste Gruppe von Durchgangslöchern (111a) befindet, eine zweite Gruppe von Vorsprüngen (122), die sich zwischen der zweiten Gruppe von Durchgangslöchern (111b) und der dritten Gruppe von Durchgangslöchern (111c) angrenzend an die zweite Gruppe von Durchgangslöchern (111b) befindet, und eine dritte Gruppe von Vorsprüngen (123), die sich zwischen der ersten Gruppe von Vorsprüngen (121) und der zweiten Gruppe von Vorsprüngen (122) befindet; die erste Gruppe von Vorsprüngen (121) umfasst einen ersten Teil (121a), der sich zwischen dem ersten Anschluss-Durchgangsloch (1111) in der ersten Gruppe von Durchgangslöchern (111a) und dem zweiten Anschluss-Durchgangsloch (1112) in der dritten Gruppe von Durchgangslöchern (111c) angrenzend an die erste Gruppe von Durchgangslöchern (111a) befindet, und einen zweiten Teil (121b), der sich zwischen dem zweiten Anschluss-Durchgangsloch (1112) in der ersten Gruppe von Durchgangslöchern (111a) und dem ersten Anschluss-Durchgangsloch (1111) in der dritten Gruppe von Durchgangslöchern (111c) angrenzend an die erste Gruppe von Durchgangslöchern (111a) befindet; und projiziert entlang der zweiten Richtung (Y) ist eine Breite einer Projektion des ersten Teils (121a) auf die Grundplatte (11) entlang der ersten Richtung (X) W1, eine Breite einer Projektion des zweiten Teils auf die Grundplatte (11) entlang der ersten Richtung (X) ist W2, und W1 ist größer als W2.

7. Das Batteriemodul (100) nach Anspruch 6, wobei entlang der ersten Richtung (X) ein Abstand zwischen dem ersten Teil (121a) und der zweiten Gruppe von Vorsprüngen (122) gleich einem Abstand zwischen dem zweiten Teil (121b) und der zweiten Gruppe von Vorsprüngen (122) ist.

8. Das Batteriemodul (100) nach Anspruch 6 oder 7, wobei bei Ansicht entlang der zweiten Richtung (Y) die zweite Gruppe von Vorsprüngen (122) einen dritten Teil (122a) umfasst, der sich zwischen einem zweiten Anschluss-Durchgangsloch (1112) in der zweiten Gruppe von Durchgangslöchern (111b) und einem ersten Anschluss-Durchgangsloch (1111) in der dritten Gruppe von Durchgangslöchern (111c) angrenzend an die zweite Gruppe von Durchgangslöchern (111b) befindet, und einen vierten Teil (122b), der sich zwischen einem ersten Anschluss-Durchgangsloch (1111) in der zweiten Gruppe von Durchgangslöchern (111b) und einem zweiten Anschluss-Durchgangsloch (1112) in der dritten Gruppe von Durchgangslöchern (111c) angrenzend an die zweite Gruppe von Durchgangslöchern (111b) befindet; projiziert entlang der zweiten Richtung (Y) ist eine Breite einer Projektion des dritten Teils (122a) auf die Grundplatte (11) entlang der ersten Richtung (X) W3, eine Breite einer Projektion des vierten Teils (122b) auf die Grundplatte (11) entlang der ersten Richtung (X) ist W4, und W3 ist kleiner als W4.

9. Das Batteriemodul (100) nach einem der Ansprüche 6 bis 8, wobei entlang der ersten Richtung (X) die Grundplatte (11) eine zweite seitliche Kante (11B) und eine erste seitliche Kante (11A) aufweist, ein Abstand zwischen dem zweiten Anschluss-Durchgangsloch (1112) in der zweiten Gruppe von Durchgangslöchern (111b) und der ersten seitlichen Kante (11A) d21 beträgt, ein Abstand zwischen dem ersten Anschluss-Durchgangsloch (1111) in der zweiten Gruppe von Durchgangslöchern (111b) und der ersten seitlichen Kante (11A) d22 beträgt, und d21 größer als d22 ist.

10. Das Batteriemodul (100) nach einem der Ansprüche 6 bis 9, wobei entlang der ersten Richtung (X) die Grundplatte (11) eine zweite seitliche Kante (11B) und eine erste seitliche Kante (11A) aufweist; und ein Ende des ersten Anschluss-Durchgangslochs (1111) in der ersten Gruppe von Durchgangslöchern (111a) ist weg von der zweiten Gruppe von Durchgangslöchern (111b) orientiert und durchdringt die zweite seitliche Kante (11B).

11. Das Batteriemodul (100) nach einem der Ansprüche 6 bis 10, wobei der Träger (1) eine dritte Seite (11c) und eine vierte Seite (11d) aufweist, wobei die dritte Seite (11c) und die vierte Seite (11d) entgegengesetzt zueinander entlang einer dritten Richtung (Z) angeordnet sind; wobei der Träger (1) eine Öffnung (11e) aufweist, die an der dritten Seite (11c) vorgesehen ist, wobei eine Vielzahl von Gruppen von Zwischenräumen zwischen der Vielzahl von Gruppen von Vorsprüngen (12) gebildet werden; und entlang der dritten Richtung (Z) steht die Öffnung (11e) mit der Vielzahl von Gruppen von Zwischenräumen in Verbindung.

12. Das Batteriemodul (100) nach einem der Ansprüche 6 bis 11, wobei der erste Anschluss (23) und der zweite Anschluss (24) durch Aufeinander-zu-Biegen miteinander verbunden sind, wobei der erste Anschluss (23) einen ersten Anschlussverbindungsteil (231) aufweist, der durch das erste Anschluss-Durchgangsloch (1111) hindurchgeht, und der zweite Anschluss (24) einen zweiten Anschlussverbindungsteil (241) aufweist, der durch das zweite Anschluss-Durchgangsloch (1112) hindurchgeht; das Batteriemodul (100) weiterhin eine Vielzahl von Leitstücken (4) aufweist, und die Vielzahl von Leitstücken (4) auf einer Seite der Grundplatte (11) angeordnet ist, wobei die Seite der Grundplatte (11) eine Seite ist, die weg von dem Vorsprung (12) gerichtet ist; der erste Anschlussverbindungsteil (231) und der zweite Anschlussverbindungsteil (241) sind mit dem Leitstück (4) verbunden; und der Träger (1) weiterhin einen Trennabschnitt (13) aufweist, der sich auf der ersten Seite der Grundplatte (11) befindet, und der Trennabschnitt (13) zwischen dem ersten Anschluss-Durchgangsloch (1111) und dem zweiten Anschluss-Durchgangsloch (1112) in einer gleichen Gruppe von Durchgangslöchern (111) angeordnet ist.

13. Das Batteriemodul (100) nach Anspruch 11, wobei das Batteriemodul (100) weiterhin umfasst: ein erstes Verbindungsstück (61), wobei ein Ende des ersten Verbindungsstücks (61) mit dem ersten Anschluss (23) verbunden ist, der erste Anschluss (23) durch das erste Anschluss-Durchgangsloch (1111) in der ersten Gruppe von Durchgangslöchern (111a) hindurchgeht, und ein anderes Ende des ersten Verbindungsstücks (61) einen ersten Verbindungsteil (611) aufweist; und ein zweites Verbindungsstück (62), wobei ein Ende des zweiten Verbindungsstücks (62) mit dem zweiten Anschluss (24) verbunden ist, der zweite Anschluss (24) durch das zweite Anschluss-Durchgangsloch (1112) in der zweiten Gruppe von Durchgangslöchern (111b) hindurchgeht, ein anderes Ende des zweiten Verbindungsstücks (62) einen zweiten Verbindungsteil (621) aufweist, und der erste Verbindungsteil (611) und der zweite Verbindungsteil (621) sich auf einer gleichen Seite der Grundplatte (11) befinden.

14. Das Batteriemodul (100) nach Anspruch 13, wobei der Träger (1) weiterhin einen Isolierblock (16) aufweist, wobei der Isolierblock (16) auf der zweiten Seite der Grundplatte (11) angeordnet ist und sich zwischen dem ersten Anschluss-Durchgangsloch (1111) in der ersten Gruppe von Durchgangslöchern (111a) und einer angrenzenden dritten Gruppe von Durchgangslöchern (111c) befindet; entlang der dritten Richtung (Z) ist eine Länge des Isolierblocks (16) größer als eine Länge des ersten Anschluss-Durchgangslochs (1111) in der ersten Gruppe von Durchgangslöchern (111a).

15. Ein elektrisches Gerät (200), wobei das elektrische Gerät (200) das Batteriemodul (100) nach einem der Ansprüche 1 bis 14 aufweist.

## Revendications

1. Module de batterie (100), comprenant :
une pluralité de cellules (2), empilées selon une première direction (X), dans lequel chaque cellule (2) comprend une première borne (23) et une deuxième borne (24), et la polarité de la première borne (23) est opposée à celle de la deuxième borne (24) ;
un support (1) comprenant une pluralité de groups de trous traversants (111), dans lequel chaque groupe de trous traversants (111) comprend un premier trou traversant de borne (1111) et un deuxième trou traversant de borne (1112), et la première borne (23) et la deuxième borne (24) d'une même cellule (2) traversent respectivement le premier trou traversant de borne (1111) et le deuxième trou traversant de borne (1112) dans un même groupe de trous traversants (111) ;
la première borne (23) comprend une première partie de connexion de borne (231) qui traverse le premier trou traversant de borne (1111) ;
dans lequel la pluralité de groupes de trous traversants (111) comprend un premier groupe de trous traversants (111a), un deuxième groupe de trous traversants (111b) et une pluralité de troisièmes groupes de trous traversants (111c) situés entre le premier groupe de trous traversants (111a) et le deuxième groupe de trous traversants (111b) ;
le long de la première direction (X), une distance D1entre le premier trou traversant terminal (1111) du premier groupe de trous traversants (111a) et le deuxième trou traversant terminal (1112) d'un troisième groupe de trous traversants (111c) adjacent au premier groupe de trous traversants (111a) est supérieure à une distance D3 entre deux trous adjacents.
le long de la première direction (X), le module de batterie (100) comprend deux cellules situées aux extrémités (2), les deux cellules les plus à l'extérieur (2) sont une première cellule (81) et une deuxième cellule (82), la première cellule (81) étant la première cellule (2) dans la première direction (X) et la deuxième cellule (82) étant la dernière cellule (2) dans la première direction (X) ;
la première borne (23) de la deuxième cellule (82) traverse le premier trou de passage de borne (1111) du premier groupe de trous de passage (111a), **caractérisé en ce que** la première partie de connexion de borne (231) de la deuxième cellule (82) est orientée vers la cellule (2) adjacente à la deuxième cellule (82) ;
la première partie de connexion de borne (231) de la deuxième cellule (82) est connectée à une première pièce de connexion (61), et
la première borne (231) de la deuxième cellule (82) est en outre connectée électriquement à la première pièce de connexion (61) configurée pour connecter des dispositifs externes.

2. Le module batterie (100) selon la revendication 1, dans lequel, dans les deux troisièmes groupes de trous traversants (111c) adjacents, une distance entre le premier trou de borne (1111) dans l'un des deux troisièmes groupes de trous traversants (111c) adjacents et le deuxième trou de borne (1112) dans l'autre des deux troisièmes groupes de trous traversants (111c) est D3 ;
le premier trou traversant de borne (1111) situé dans l'un des deux troisièmes groupes adjacents de trous traversants (111c) et le deuxième trou traversant de borne (1112) situé dans l'autre des deux troisièmes groupes adjacents de trous traversants (111c) sont disposés face à face le long de la première direction (X).

3. Le module batterie (100) selon la revendication 1 ou 2, dans lequel une différence entre D1 et D3 est supérieure à 6 mm.

4. Le module batterie (100) selon l'une quelconque des revendications 1 à 3, dans lequel une distance entre le deuxième trou de borne (1112) dans le deuxième groupe de trous traversants (111b) et le premier trou de borne (1111) dans un troisième groupe de trous traversants (111c) adjacent au deuxième groupe de trous traversants (111b) est D2, et D2 est inférieur à D3.

5. Le module batterie (100) selon l'une quelconque des revendications 1 à 4, dans lequel, selon la première direction (X), une distance d1 entre le premier trou de borne (1111) dans le premier groupe de trous traversants (111a) et le deuxième trou de borne (1112) dans le deuxième groupe de trous traversants (111b) est égale à une distance d2 entre le deuxième trou de borne (1112) dans le premier groupe de trous traversants (111a) et le premier trou de borne (1111) dans le deuxième groupe de trous traversants (111b).

6. Le module batterie (100) selon l'une quelconque des revendications 1 à 5, dans lequel le support (1) comprend en outre une plaque de base (11) et plusieurs groupes de portions saillantes (12), lesdits plusieurs groupes de portions saillantes (12) étant espacés les uns des autres ;
la plaque de base (11) comprend une première face (11a) et une deuxième face (11b), la première face (11a) et la deuxième face (11b) étant disposées en vis-à-vis l'une de l'autre selon une deuxième direction (Y), et la pluralité de groupes de parties en saillie (12) étant situés sur la première face de la plaque de base (11), la deuxième direction (Y) étant perpendiculaire à la première direction (X) ;
vue dans la deuxième direction (Y), la pluralité de groupes de parties saillantes (12) comprend un premier groupe de parties saillantes (121) situé entre le premier groupe de trous traversants (111a) et le troisième groupe de trous traversants (111c) adjacent au premier groupe de trous traversants (111a), un deuxième groupe de parties saillantes (122) situées entre le deuxième groupe de trous traversants (111b) et le troisième groupe de trous traversants (111c) adjacent au deuxième groupe de trous traversants (111b), et un troisième groupe de parties saillantes (123) situées entre le premier groupe de parties saillantes (121) et le deuxième groupe de parties saillantes (122) ;
le premier groupe de parties saillantes (121) comprend une première partie (121a) située entre le premier trou traversant de borne (1111) du premier groupe de trous traversants (111a) et le deuxième trou traversant de borne (1112) du troisième groupe de trous traversants (111c) adjacent au premier groupe de trous traversants (111a), et une deuxième partie (121b) située entre le deuxième trou traversant de borne (1112) du premier groupe de trous traversants (111a) et le premier trou traversant de borne (1111) du troisième groupe de trous traversants (111c) adjacent au premier groupe de trous traversants (111a) ; et
projetée le long de la deuxième direction (Y), la largeur de la projection de la première partie (121a) sur la plaque de base (11) le long de la première direction (X) est W1, la largeur de la projection de la deuxième partie sur la plaque de base (11) le long de la première direction (X) est W2, et W1 est supérieure à W2.

7. Le module batterie (100) selon la revendication 6, dans lequel selon la première direction (X), une distance entre la première partie (121a) et le deuxième groupe de portions saillantes (122) est égale à une distance entre la deuxième partie (121b) et le deuxième groupe de portions saillantes (122).

8. Le module batterie (100) selon la revendication 6 ou 7, dans lequel vue selon la deuxième direction (Y), le deuxième groupe de portions saillantes (122) comprend une troisième partie (122a) située entre un deuxième trou de borne (1112) dans le deuxième groupe de trous traversants (111b) et un premier trou de borne (1111) dans le troisième groupe de trous traversants (111c) adjacent au deuxième groupe de trous traversants (111b), et une quatrième partie (122b) située entre un premier trou de borne (1111) dans le deuxième groupe de trous traversants (111b) et un deuxième trou de borne (1112) dans le troisième groupe de trous traversants (111c) adjacent au deuxième groupe de trous traversants (111b) ;
projetée selon la deuxième direction (Y), la largeur de la projection de la troisième partie (122a) sur la plaque de base (11) selon la première direction (X) est W3, la largeur de la projection de la quatrième partie (122b) sur la plaque de base (11) selon la première direction (X) est W4, et W3 est inférieure à W4.

9. Le module batterie (100) selon l'une quelconque des revendications 6 à 8, dans lequel selon la première direction (X), la plaque de base (11) comprend un deuxième bord latéral (11B) et un premier bord latéral (11A), une distance entre le deuxième trou de borne (1112) dans le deuxième groupe de trous traversants (111b) et le premier bord latéral (11A) est d21, une distance entre le premier trou de borne (1111) dans le deuxième groupe de trous traversants (111b) et le premier bord latéral (11A) est d22, et d21 est supérieure à d22.

10. Le module batterie (100) selon l'une quelconque des revendications 6 à 9, dans lequel selon la première direction (X), la plaque de base (11) comprend un deuxième bord latéral (11B) et un premier bord latéral (11A) ; et une extrémité du premier trou de borne (1111) dans le premier groupe de trous traversants (111a) est orientée à l'opposé du deuxième groupe de trous traversants (111b) et traverse le deuxième bord latéral (11B).

11. Le module batterie (100) selon l'une quelconque des revendications 6 à 10, dans lequel le support (1) comprend un troisième côté (11c) et un quatrième côté (11d), le troisième côté (11c) et le quatrième côté (11d) étant disposés en regard l'un de l'autre selon une troisième direction (Z) ;
le support (1) comporte une ouverture (11e) prévue sur le troisième côté (11c), plusieurs groupes d'interstices sont formés entre les plusieurs groupes de parties en saillie (12) ; et, dans la troisième direction (Z), l'ouverture (11e) communique avec les plusieurs groupes d'interstices.

12. Le module batterie (100) selon l'une quelconque des revendications 6 à 11, dans lequel la première borne (23) et la deuxième borne (24) sont connectées l'une à l'autre en se pliant l'une vers l'autre, la première borne (23) comprend une première portion de connexion de borne (231) passant à travers le premier trou de borne (1111), et la deuxième borne (24) comprend une deuxième portion de connexion de borne (241) passant à travers le deuxième trou de borne (1112) ;
le module de batterie (100) comprend en outre une pluralité d'éléments conducteurs (4), et cette pluralité d'éléments conducteurs (4) est disposée sur un côté de la plaque de base (11), ce côté de la plaque de base (11) étant orienté à l'opposé de la partie en saillie (12) ;
la première partie de connexion de borne (231) et la deuxième partie de connexion de borne (241) sont connectées à la pièce conductrice (4) ; et
le support (1) comprend en outre une partie de séparation (13) située sur le premier côté de la plaque de base (11), et la partie de séparation (13) est disposée entre le premier trou traversant de borne (1111) et le deuxième trou traversant de borne (1112) dans un même groupe de trous traversants (111).

13. Le module batterie (100) selon la revendication 11, dans lequel le module batterie (100) comprend en outre :
• un premier élément de connexion (61), dans lequel une extrémité du premier élément de connexion (61) est connectée à la première borne (23), la première borne (23) passe à travers le premier trou de borne (1111) dans le premier groupe de trous traversants (111a), et une autre extrémité du premier élément de connexion (61) comprend une première portion de connexion (611) ; et
• un deuxième élément de connexion (62), dans lequel une extrémité du deuxième élément de connexion (62) est connectée à la deuxième borne (24), la deuxième borne (24) passe à travers le deuxième trou de borne (1112) dans le deuxième groupe de trous traversants (111b), une autre extrémité du deuxième élément de connexion (62) comprend une deuxième portion de connexion (621), et la première portion de connexion (611) et la deuxième portion de connexion (621) sont situées sur un même côté de la plaque de base (11).

14. Le module batterie (100) selon la revendication 13, dans lequel le support (1) comprend en outre un bloc d'isolation (16), le bloc d'isolation (16) est disposé sur le deuxième côté de la plaque de base (11) et est situé entre le premier trou de borne (1111) dans le premier groupe de trous traversants (111a) et un troisième groupe de trous traversants (111c) adjacent ;
dans la troisième direction (Z), la longueur du bloc isolant (16) est supérieure à celle du premier trou traversant de borne (1111) du premier groupe de trous traversants (111a).

15. Dispositif électrique (200), dans lequel le dispositif électrique (200) comprend le module batterie (100) selon l'une quelconque des revendications 1 à 14.
